# EUROPEAN PATENT APPLICATION

(11) **EP 2 750 479 A2**
(43) Date of publication of application: **02.07.2014**
(21) Application number: 13181740.5
(22) Date of filing: 26.08.2013
(51) Int. Cl.: H05B 37/02, H05B 37/03

(54) **Lighting control system and lamp**

(30) Priority: 27.12.2012 JP 2012286304
(71) Applicant: Toshiba Lighting & Technology Corporation, Yokosuka-shi Kanagawa 237-8510 (JP); Kabushiki Kaisha Toshiba, Minato-ku, Tokyo 105-8001 (JP)
(72) Inventor: Teramoto, Keiichi, Tokyo 105-8001 (JP); Yamada, Hisashi, Tokyo 105-8001 (JP); Hayashi, Hisashi, Tokyo 105-8001 (JP); Yonezawa, Minoru, Tokyo 105-8001 (JP); Terashima, Yoshiki, Tokyo 105-8001 (JP)
(74) Representative: Bokinge, Ole

(57) **Abstract**

A lighting control system (1) performs a lighting control on slave lamps (30A to 30F) under the control of a master lamp (20A and 20B) communicating with and connected to a management apparatus (10). The master lamp (20A or 20B) includes an adding unit (24a) that adds the slave lamps (30A to 30F) placed under the control of the other master lamp (20A or 20B) to the slave lamps (30A to 30F) under its own control, when the other master lamp (20A or 20B) fails. The master lamp (20A and 20B) includes a lighting control unit (24b) that performs the lighting control on the slave lamps (30A to 30F), based on a command relating to the lighting control, which is received from the management apparatus (10).

## Description

### FIELD

Embodiments described herein relate generally to a lighting control system and a lamp.

### BACKGROUND

In order to remote-control and monitor many lamps installed in a traffic network, a method has been introduced which connects a management apparatus and a lamp group to each other by using a wired communication line.

Herein, the above-described method adopts only one communication line connecting the management apparatus and the respective lamps to each other. Thus, if the communication line is disconnected due to a failure occurring during disasters, there has been a problem in that the management apparatus and the lamp group can no longer be connected to each other.

An object of embodiments described herein is to provide a lighting control system and a lamp which can connect the management apparatus and the lamp group to each other, even if a failure occurs during disasters.

### BRIEF DESCRIPTION OF THE DRAWINGS

FIG. 1 illustrates an outline of an example of a first lighting control system.
FIG. 2 illustrates an example of a lighting control for a master lamp and a slave lamp.
FIG. 3 illustrates an example of a configuration of the master lamp.
FIG. 4 illustrates an example of master lamp information stored in a master lamp information storage unit.
FIG. 5 illustrates an example of slave lamp information stored in a slave lamp information storage unit.
FIG. 6A illustrates an example of a connection relationship between the master lamp and the slave lamp.
FIG. 6B illustrates an example of the connection relationship between the master lamp and the slave lamp, when a trouble occurs in the master lamp.
FIG. 7 is a flowchart illustrating an example of a lighting control process flow in a master lamp according to a first embodiment.
FIG. 8 illustrates an outline of an example of a second lighting control system.
FIG. 9A illustrates an example of a lamp control and a vehicle lamp control during a traffic jam.
FIG. 9B illustrates an example of the lamp control and the vehicle lamp control during no more traffic jam.
FIG. 10 is a flowchart illustrating an example of a lighting control process flow in a management apparatus according to a second embodiment.
FIG. 11 illustrates an outline of an example of a third lighting control system.
FIG. 12 illustrates a process for specifying a failed lamp by checking a power amount when lamps are sequentially lit.
FIG. 13 illustrates a process for specifying a failed lamp by checking a power amount when lamp groups are sequentially lit.
FIG. 14 is a flowchart illustrating an example of a lighting control process flow in a management apparatus according to a third embodiment.

### DETAILED DESCRIPTION

A lighting control system according to the following embodiments includes a plurality of first lamps communicating with and connected to a management apparatus. In addition, the lighting control system according to the embodiments includes second lamps under the control of the first lamps. In addition, the lighting control system according to the embodiments includes an adding unit that is disposed at each first lamp and adds the second lamps placed under the control of the other first lamp to the second lamps under its own control, when the other first lamp fails. In addition, the lighting control system according to the embodiments includes a lighting control unit that performs a lighting control on the second lamps under the control, based on a command relating to the lighting control, which is received from the management apparatus.

The adding unit included in the first lamps of the lighting control system according to the embodiments, when receiving information for identifying the other first failed lamp from the management apparatus, specifies the second lamps placed under the control of the other first failed lamp, and adds the second lamps to the second lamps under its own control.

The adding unit included in the first lamps of the lighting control system according to the embodiments, when communication with the other first lamp is disconnected, or when receiving a notification of failure occurrence from the other first failed lamp, specifies the second lamps placed under the control of the other first failed lamp, and adds the second lamps to the second lamps under its own control.

The first lamps of the lighting control system according to the embodiments further include a detection unit that detects a degree of brightness of the surrounding, and the lighting control unit performs the lighting control on the second lamps, according to the degree of brightness of the surrounding, which is detected by the detection unit.

The management apparatus of the lighting control system according to the embodiments includes a traffic jam detection unit that detects a traffic jam on a road near a lamp, based on acquired information relating to traffic on the road. In addition, the management apparatus includes a lamp control unit that controls the lamp installed near the road where the traffic jam is detected by the traffic jam detection unit so as to increase illumination. In addition, the management apparatus includes a vehicle lamp control unit that controls a vehicle lamp of an electric vehicle near the road where the traffic jam is detected by the traffic jam detection unit to decrease the illumination.

The traffic jam detection unit included in the management apparatus of the lighting control system according to the embodiments detects no more traffic jam on the road near the lamp, based on the information relating to the traffic on the road. In addition, the lamp control unit included in the management apparatus controls the lamp installed near the road where no more traffic jam is detected by the traffic jam detection unit so as to decrease the illumination and recover the original illumination. In addition, the vehicle lamp control unit included in the management apparatus controls the vehicle lamp of the electric vehicle near the road where no more traffic jam is detected by the traffic jam detection unit so as to increase the illumination and recover the original illumination.

As the information relating to the traffic on the road, the traffic jam detection unit included in the management apparatus of the lighting control system according to the embodiments obtains any one or more information items among information relating to a route of the vehicle or a position of the vehicle, which is received from a car navigation system, information relating to a traffic volume on the road or information relating to a speed of the vehicle travelling on the road, which is received from a road sensor, and information relating to time for switching a signal, which is received from a traffic signal, and detects the traffic jam or no more traffic jam on the road near the lamp, based on the obtained information.

The management apparatus of the lighting control system according to the embodiments includes a lighting command unit commands each lamp or each lamp group to be lit at respectively different time. The management apparatus includes a failure specifying unit that monitors power consumption at the time for lighting each lamp or each lamp group which is commanded by the lighting command unit, and specifies the failed lamp, based on the power consumption.

A lamp according to the embodiments includes an adding unit that adds lamps placed under the control of the other lamp to lamps under its own control, when the other lamp fails. In addition, the lamp includes a lighting control unit that performs lighting control on the lamps under its own control, based on a command relating to the lighting control, which is received from a management apparatus.

The adding unit included in the lamp according to the embodiments, when receiving information for identifying the other failed lamp from the management apparatus, specifies lamps placed under the control of the other failed lamp, and adds the lamps placed under the control to the lamps under its own control.

The adding unit included in the lamp according to the embodiments, when communication with the other lamp is disconnected, or when receiving a notification of failure occurrence from the other failed lamp, specifies the lamps placed under the control of the other failed lamp, and adds the lamps placed under the control to the lamps under its own control.

The lamp according to the embodiments further includes a detection unit that detects a degree of brightness of the surrounding, and the lighting control unit performs the lighting control on the lamps under its own control, according to the degree of brightness of the surrounding, which is detected by the detection unit.

### (First Embodiment)

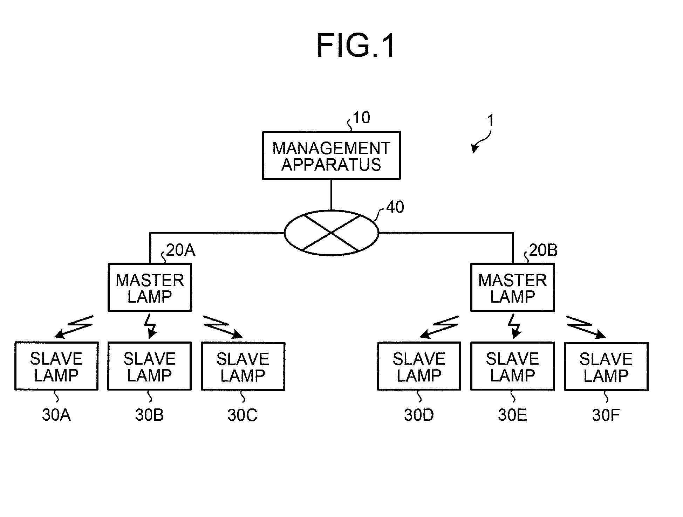

FIG. 1 illustrates an outline of an example of a lighting control system according to the first embodiment. Referring to FIG. 1, an example of the lighting control system according to the first embodiment will be described.

### [Example of Configuration of Lighting Control System 1]

The lighting control system 1 according to the first embodiment illustrated in FIG. 1 includes a management apparatus 10, a plurality of master lamps 20A and 20B, and a plurality of slave lamps 30A to 30F. The management apparatus 10 is connected to the master lamps 20A and 20B via a network 40, and communicates with the master lamps 20A and 20B to control an operation such as switching on, switching off, flashing and light modulation. For example, the network 40 may be any network such as the Internet, LAN (Local Area Network) and WAN (Wide Area Network).

The management apparatus 10, for example, is a management server centrally managing and adjusting the power consumption of lamps by controlling the operation of a plurality of lamps arranged within a predetermined area. In addition, the management apparatus 10 may be a management server disposed in a Smart City which centrally manages the power consumption in an area or in a city. In addition, the management apparatus 10 may be a apparatus collectively managing any apparatus, without being limited to the lamps, which is disposed in a public space and operated by receiving power supply.

The master lamps 20A and 20B and the slave lamps 30A to 30F are installed on a road at arbitrary intervals to illuminate the road. FIG. 1 illustrates two master lamps and six slave lamps, but without being limited to this, any number of lamps may be disposed on the road.

In addition, the master lamps 20A and 20B have the wireless communication established across the slave lamps 30A to 30F under the respective control, and perform a switching on-and-off control or a light modulation control with respect to the slave lamps 30A to 30F under its own control. For example, in the example in FIG. 1, the master lamp 20A has the wireless communication established across the slave lamps 30A to 30C, and performs the switching on-and-off control or the light modulation control. In addition, the master lamp 20B has the wireless communication established across the slave lamps 30D to 30F, and performs the switching on-and-off control or the light modulation control.

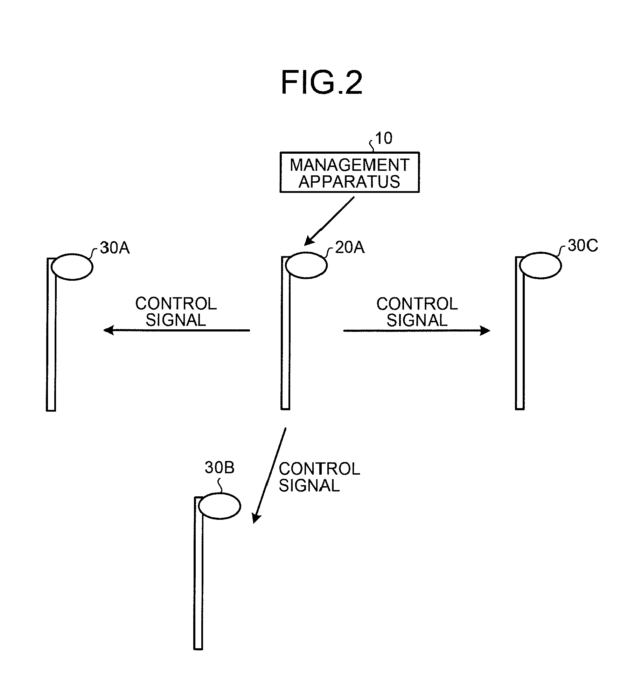

Referring to FIG. 2, an example of the lighting control between the master lamp 20A and the slave lamps 30A to 30C will be described. FIG. 2 illustrates an example of the lighting control for the master lamp and the slave lamps. As illustrated in FIG. 2, the master lamp 20A, when receiving a command relating to the lighting control from the management apparatus 10, controls the switching on and off of its own lighting according to the command, and transmits a control signal commanding the operation such as switching on, switching off, flashing and light modulation to the slave lamps 30A to 30C under its control by using the wireless communication.

In addition, the master lamps 20A and 20B have an illumination sensor, for example, as a detection unit that detects a degree of brightness of the surrounding. The master lamp 20A, when it is dark due to rain, transmits the control signal commanding the switching on to the slave lamps 30A to 30C by using the wireless communication.

### [Example of Configuration of Master Lamp 20]

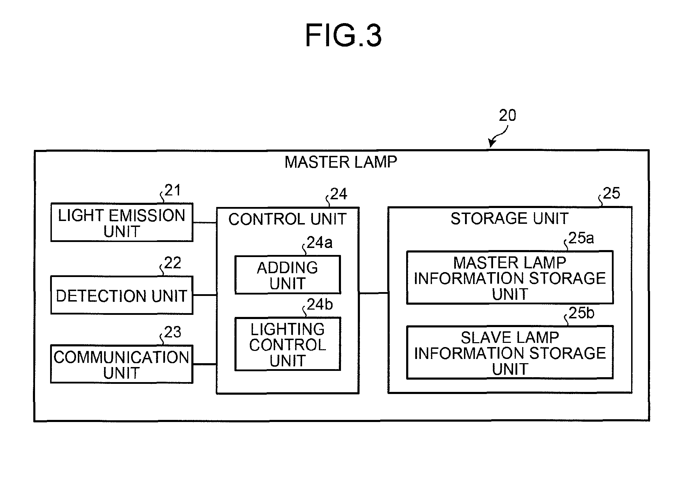

Referring to FIG. 3, a configuration of the master lamp 20 will be described. The master lamp 20 includes a light emission unit 21, a detection unit 22, a communication unit 23, a control unit 24 and a storage unit 25. The light emission unit 21 is configured to have an LED (Light Emitting Diode) or a fluorescent lamp, and the control unit 24 controls a switching on-and-off process or light modulation process for the light emission unit 21. The detection unit 22 is configured to have the illumination sensor, detects a degree of brightness of the surrounding, and notifies the control unit 24 of the detected degree of brightness. The communication unit 23 controls the communication with the management apparatus 10 via the network 40 or the communication with the slave lamps 30.

The storage unit 25 stores information used for the process in the master lamp 20 or information produced in the master lamp 20. The storage unit 25 includes a master lamp information storage unit 25a and a slave lamp information storage unit 25b.

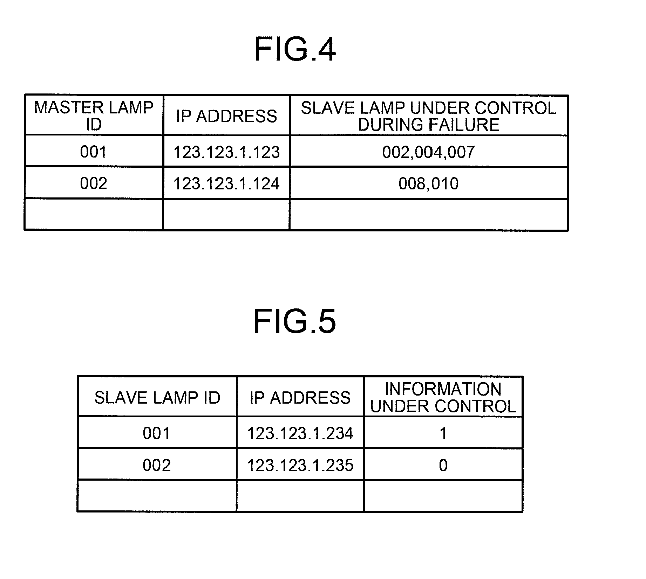

The master lamp information storage unit 25a stores information relating to the other master lamp. FIG. 4 illustrates an example of master lamp information stored in the master lamp information storage unit 25a. As illustrated in FIG. 4, the master lamp information storage unit 25a associates and stores a "master lamp ID" which is an ID for uniquely identifying the other master lamp, an "IP address" which is an address for communicating with the other master lamp, and a "slave lamp under the control during a failure" which is an ID of the slave lamp 30 to be added to the slave lamps under the control when the other master lamp fails.

For example, in the example in FIG. 4, in association with a master lamp "001", an IP address "123.123.1.123" and a slave lamp under the control during a failure "002,004,007" are stored. In addition to this, information relating to an installation place of the other master lamp may also be stored in the master lamp information storage unit 25a. In addition, the information stored in the master lamp information storage unit 25a may be arbitrarily updated by a user who has registered the information.

The slave lamp information storage unit 25b stores information relating to the slave lamp 30. FIG. 5 illustrates an example of slave lamp information stored in the slave lamp information storage unit 25b. As illustrated in FIG. 5, the slave lamp information storage unit 25b associates and stores a "slave lamp ID" which is an ID for uniquely identifying the slave lamp 30, an "IP address" which is an address for communicating with the slave lamp 30, and "information under the control" indicating whether or not the slave lamp is under the control. Herein, if the "information under the control" is "1", it is meant that the slave lamp is currently under the control of its own master lamp 20. If the "information under the control" is "0", it is meant that the slave lamp is not currently under the control of its own master lamp 20.

For example, in the example in FIG. 5, in association with a slave lamp "001", an IP address "123.123.1.234" and the information under the control "1" are stored. In addition to this, information relating to an installation place of the slave lamp 30 may also be stored in the slave lamp information storage unit 25b. In addition, the information stored in the slave lamp information storage unit 25b may be arbitrarily updated by a user who has registered the information.

The control unit 24 includes an adding unit 24a and a lighting control unit 24b. The adding unit 24a, when the other master lamp fails, adds the slave lamp 30 placed under the control of the other master lamp to the slave lamps 30 under its own control.

For example, the adding unit 24a, when receiving the ID "001" of the other failed master lamp from the management apparatus 10 via the communication unit 23, obtains the slave lamp under the control during a failure "002, 004, 007" corresponding to the received ID of the master lamp, from the master lamp information storage unit 25a. Then, the adding unit 24a obtains the IP address corresponding to the slave lamp IDs "002", "004" and "007" from the slave lamp information storage unit 25b, and establishes the wireless communication with the respective slave lamps 30 of the slave lamp IDs "002", "004" and "007". Then, after establishing the wireless communication, the adding unit 24a updates the "information under the control" corresponding to the ID of the slave lamps having the wireless communication established to "1" in the slave lamp information storage unit 25b.

In addition, for example, when periodically communicating with the other master lamp and the communication is disconnected, or when receiving a notification of its own failure from the other master lamp, as described above, the adding unit 24a may add the slave lamp 30 placed under the control of the other master lamp to the slave lamps 30 under its own control. In addition, in the above description, a case of receiving the ID of the other failed master lamp from the management apparatus 10 has been described. However, the ID of the slave lamp 30 to be newly placed under the control may be received from the management apparatus 10.

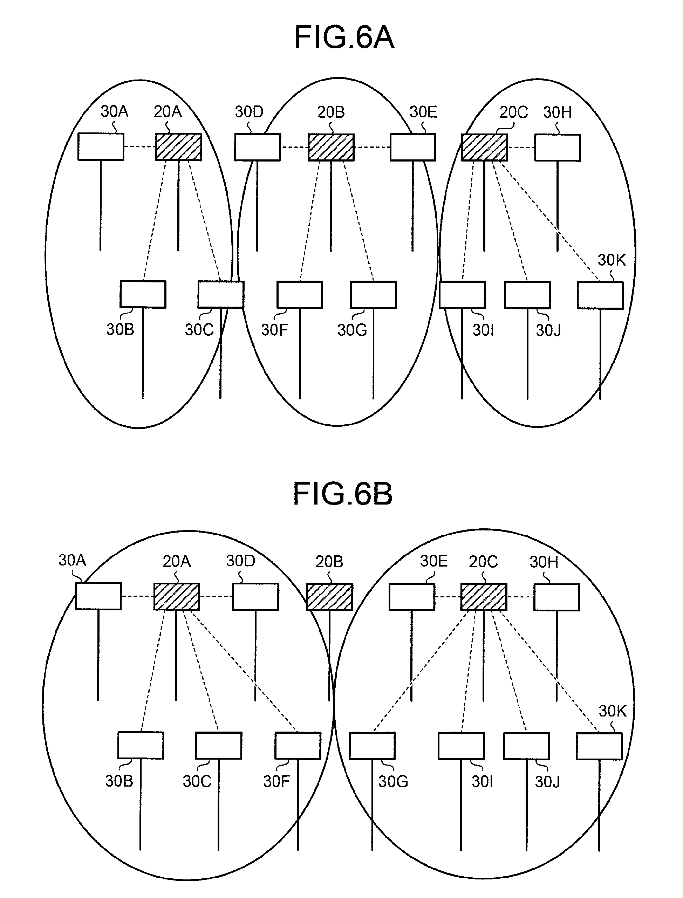

FIG. 6A illustrates an example of a connection relationship between the master lamp and the slave lamp. FIG. 6B illustrates an example of a connection relationship between the master lamp and the slave lamp, when a trouble occurs in the master lamp. As illustrated in FIG. 6A, the slave lamps 30A to 30C are placed under the control of the master lamp 20A, slave lamps 30D to 30G are placed under the control of the master lamp 20B, and slave lamps 30H to 30K are placed under the control of a master lamp 20C.

The example in FIG. 6B assumes that the master lamp 20B fails due to the disaster and the communication is disconnected between the master lamp 20B and the slave lamps 30D to 30G. Then, the master lamp 20A establishes the wireless communication with the slave lamps 30D and 30F among the slave lamps 30D to 30G where the communication with the master lamp 20B is disconnected, and newly places the slave lamps 30D and 30F under its own control. In addition, the master lamp 20C establishes the wireless communication with the slave lamps 30E and 30G among the slave lamps 30D to 30G where the communication with the master lamp 20B is disconnected, and newly places the slave lamps 30E and 30G under its own control.

In this manner, even if the master lamp 20B fails, the master lamps 20A and 20C establish the wireless communication with the slave lamps 30D to 30G placed under the control of the master lamp 20B. Accordingly, even if a trouble occurs due to the disaster, the management apparatus 10 and the lamp group can be connected to each other.

The lighting control unit 24b performs the lighting control on the slave lamp 30, based on the command relating to the lighting control, which is received from the management apparatus 10. For example, the lighting control unit 24b, when receiving a control signal commanding an operation such as switching on, switching off, flashing and light modulation from the management apparatus 10, refers to the slave lamp information storage unit 25b and specifies the slave lamp 30 which is currently under its own control. Then, the lighting control unit 24b transmits the control signal commanding the operations such as switching on, switching off, flashing and light modulation to the slave lamp 30 under its own control by using the wireless communication so as to perform the lighting control on the slave lamp 30 under the control.

In addition, the lighting control unit 24b performs the lighting control on the slave lamp 30 according to the degree of brightness of the surrounding, which is detected by the detection unit 22. For example, the lighting control unit 24b, when it is dark due to rain, transmits the control signal commanding the operation of the switching on to the slave lamps 30A to 30C by using the wireless communication.

### [Example of Lighting Control Process Flow]

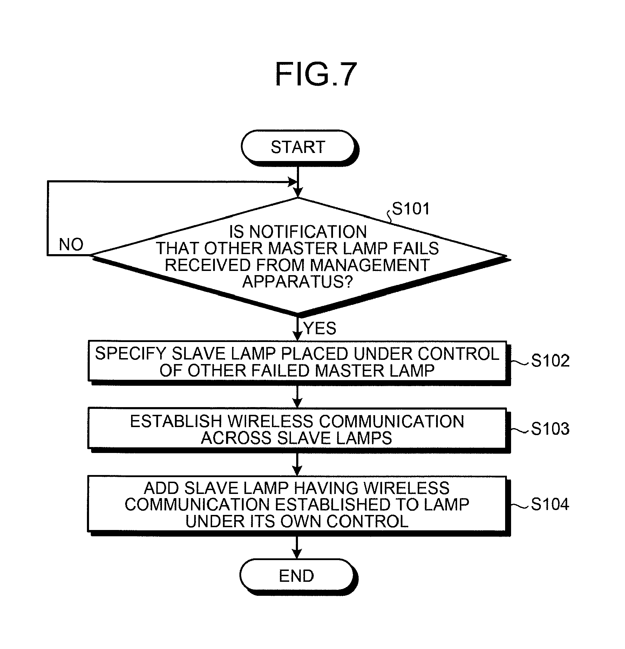

FIG. 7 is a flowchart illustrating an example of a lighting control process flow in the master lamp 20 according to the first embodiment. Referring to FIG. 7, the example of the lighting control process flow in the lighting control system 1 will be described.

First, the adding unit 24a of the master lamp 20 determines whether or not the notification that the other master lamp fails is received from the management apparatus 10 (Act 101). As a result, the adding unit 24a of the master lamp 20, when determining that the notification that the other master lamp fails is received from the management apparatus 10 (Act 101: Yes), specifies the slave lamp 30 placed under the other failed master lamp (Act 102). For example, the adding unit 24a, when receiving the ID "001" of the other failed master lamp from the management apparatus 10 via the communication unit 23, obtains the IDs "002", "004" and "007" corresponding to the received ID of the master lamp, and specifies the IDs "002", "004" and "007" of the slave lamps 30 placed under the control of the other failed master lamp.

Then, the adding unit 24a establishes the wireless communication with the specified slave lamp (Act 103), and adds the slave lamp 30 having wireless communication established to the lamp under its own control (Act 104). For example, the adding unit 24a establishes the wireless communication with each slave lamp 30 of the slave lamp IDs "002", "004" and "007", and after establishing the wireless communication, updates the "information under the control" corresponding to the ID of the slave lamp having the wireless communication established to "1" in the slave lamp information storage unit 25b. This allows the lighting control process to end.

### [Advantageous Effects of First Embodiment]

As described above, in the lighting control system 1 according to the first embodiment, when the other master lamp fails, the master lamp 20 adds the slave lamp 30 placed under the control of the other master lamp to the slave lamp under its own control. In addition, the master lamp 20 performs the lighting control on the slave lamp 30, based on the command relating to the lighting control, which is received from the management apparatus 10. Therefore, even if a trouble occurs in the master lamp due to a disaster, a normally operating master lamp adds the slave lamp placed under the control of the failed master lamp to the slave lamp under its own control. Accordingly, the management apparatus 10 and the lamp group can be connected to each other.

In addition, in the lighting control system 1 according to the first embodiment, when receiving the information for identifying the other failed master lamp from the management apparatus 10, the master lamp 20 specifies the slave lamp 30 placed under the control of the other failed master lamp, and adds the slave lamp 30 to the slave lamp 30 under its own control. Therefore, the master lamp 20 can properly recognize the other failed master lamp by receiving the ID of the other failed master lamp from the management apparatus 10.

In addition, in the lighting control system 1 according to the first embodiment, when the communication with the other master lamp is disconnected, or when receiving the notification of the failure from the other failed master lamp, the master lamp 20 specifies the slave lamp 30 placed under the control of the other failed master lamp, and adds the slave lamp 30 to the slave lamp 30 under its own control. Therefore, the communication can be performed between the respective master lamps and thus it is possible to properly recognize the other failed master lamp. The above-described notification of the failure is made when the lighting is not available due to a malfunction of the lighting control unit or a power source part in a state where a communication function is available.

In the lighting control system 1 according to the embodiment, the master lamp 20 includes the detection unit 22 that detects a degree of brightness of the surrounding, and performs the lighting control on the slave lamp 30 according to the degree of brightness of the surrounding, which is detected by the detection unit 22. Therefore, for example, it is not necessary to install expensive sensors in all lamps, if a high-performance illumination sensor is installed only in the master lamp 20 without installing the sensor in the slave lamp 30 such that the master lamp 20 controls the lighting of the slave lamp 30. Accordingly, it is possible to reduce the installation cost for the lamps.

### [Second Embodiment]

In the above-described first embodiment, a case where the management apparatus performs the lighting control on the lamp has been described. Next, a management apparatus of a second embodiment will be described as an example of performing a lighting control on a vehicle light together with the lamp.

In an electric vehicle, if the light with normal illumination is continuously switched on during parking, a storage amount of electricity is decreased and a risk of electricity shortage is increased. Thus, it is preferable to decrease the illumination of the light during the parking. Therefore, when there is a traffic jam on a road near a lamp and thus electric vehicles are frequently stopped, a management apparatus according to the second embodiment commands the electric vehicle to decrease the illumination of the light of the electric vehicle instead of increasing the illumination of the lamp.

### [Example of Configuration of Lighting Control System 2]

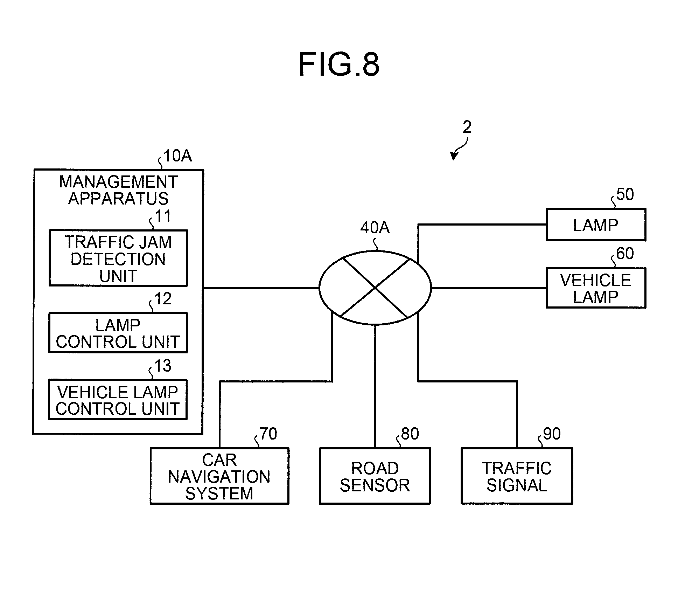

FIG. 8 illustrates an example of a configuration in a lighting control system 2 according to the second embodiment. Hereinafter, referring to FIG. 8, the configuration in the lighting control system 2 according to the second embodiment will be described. Within the configuration in the lighting control system 2 according to the second embodiment, the same configuration elements and functions as those of the first embodiment will not be repeatedly described in detail and the same reference numerals are given thereto in the drawings.

As illustrated in FIG. 8, the lighting control system 2 according to the second embodiment includes a management apparatus 10A, a lamp 50, a vehicle lamp 60, a car navigation system 70, a road sensor 80 and a traffic signal 90. The management apparatus 10A, the lamp 50, the vehicle lamp 60, the car navigation system 70, the road sensor 80 and the traffic signal 90 are communicably connected to each other via a network 40A. The numbers of the lamp 50, the vehicle lamp 60, the car navigation system 70, the road sensor 80 and the traffic signal 90 which are illustrated in FIG. 8 are merely illustrative. Accordingly any numbers of equipment can be adopted to be connected to the management apparatus 10A via the network 40A.

The management apparatus 10A receives route information or location information of a vehicle from the car navigation system 70, receives information relating to a traffic volume or speed of the vehicle from the road sensor 80, and receives signal switching information from the traffic signal 90. Then, the management apparatus 10A predicts a traffic jam near the vehicle having the car navigation system 70, based on the route information or location information of the vehicle, which is received from the car navigation system 70. The management apparatus 10A predicts the traffic jam of a road ahead of the road sensor 80, based on the information relating to the traffic volume or speed of the vehicle, which is received from the road sensor 80, and predicts the traffic jam of the road ahead of the traffic signal 90, based on the signal switching information, which is received from the traffic signal 90.

The management apparatus 10A, when predicting the traffic jam and consequently detecting the traffic jam ahead of the lamp 50, controls the lamp 50 installed near the road where the traffic jam is detected so as to increase the illumination, and controls the vehicle lamp 60 of the electric vehicle near the road so as to decrease the illumination.

In addition, the management apparatus 10A, when detecting no more traffic jam, controls the lamp 50 installed near the road where no more traffic jam is detected so as to decrease the illumination and recover the original illumination, and controls the vehicle lamp 60 of the electric vehicle near the road so as to increase the illumination and recover the original illumination.

Referring to FIG. 8, a configuration of the management apparatus 10A will be described. The management apparatus 10A includes a traffic jam detection unit 11, a lamp control unit 12 and a vehicle lamp control unit 13.

The traffic jam detection unit 11 obtains information relating to the traffic on the road, and detects the traffic jam on the road near the lamp 50, based on the information relating to the traffic on the road. In addition, the traffic jam detection unit 11 detects no more traffic jam on the road near the lamp, based on the information relating to the traffic on the road.

For example, as the information relating to the traffic on the road, the traffic jam detection unit 11 obtains any one or more information among the information relating to the route of the vehicle or location of the vehicle, which is received from the car navigation system 70, the information relating to the traffic volume on the road or the information relating to the speed of the vehicle travelling on the road, which is received from the road sensor 80, and the information relating to time for switching a signal, which is received from the traffic signal 90. Then, the traffic jam detection unit 11 detects the traffic jam or no more traffic jam on the road near the lamp 50, based on the obtained information.

The lamp control unit 12 controls the lamp 50 installed near the road where the traffic jam is detected so as to increase the illumination. For example, the lamp control unit 12 transmits a command to increase the illumination to the lamp 50 near the road where there is the traffic jam, via the network 40A, thereby controlling the lamp 50 so as to increase the illumination.

In addition, the lamp control unit 12 controls the lamp 50 installed near the road where no more traffic jam is detected so as to decrease the illumination and recover the original illumination. For example, when there is no more traffic jam, the lamp control unit 12 transmits a command to decrease the illumination and recover the original illumination to the lamp 50 via the network 40A, thereby controlling the lamp so as to decrease the illumination and recover the original illumination.

The vehicle lamp control unit 13 controls the vehicle lamp 60 of the electric vehicle near the road where the traffic jam is detected by the traffic jam detection unit 11 so as to decrease the illumination. For example, the vehicle lamp control unit 13 controls the vehicle lamp 60 of the electric vehicle near the road where there is the traffic jam so as to increase the illumination by transmitting the command to increase the illumination to the vehicle lamp 60, via the network 40A.

In addition, the vehicle lamp control unit 13 controls the vehicle lamp 60 of the electric vehicle near the road where no more traffic jam is detected by the traffic jam detection unit 11 so as to increase the illumination and recover the original illumination. The vehicle lamp control unit 13, when there is no more traffic jam, transmits the command to increase the illumination and to recover the original illumination to the vehicle lamp 60 of the electric vehicle via the network 40A, thereby controlling the vehicle lamp 60 so as to increase the illumination and recover the original illumination.

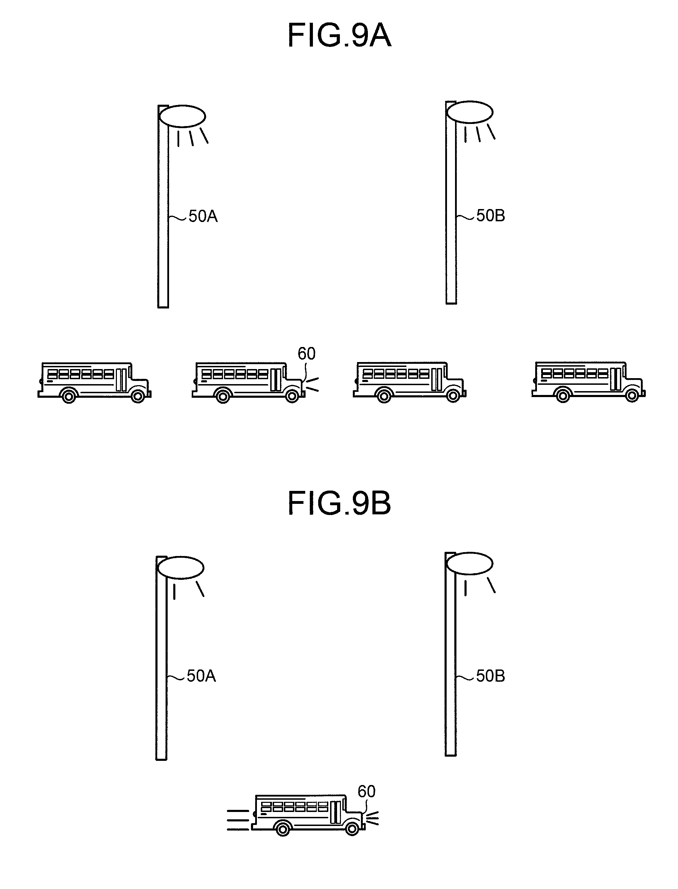

FIG. 9A illustrates an example of a lamp control and a vehicle lamp control during the traffic jam. FIG. 9B illustrates an example of the lamp control and the vehicle lamp control during no more traffic jam. As illustrated in FIG. 9A, the lamp control unit 12 transmits the command to increase the illumination to lamps 50A and 50B near the road where there is the traffic jam via the network 40A, thereby controlling the lamps so as to increase the illumination. In addition, the vehicle lamp control unit 13 transmits the command to decrease the illumination to the vehicle lamp 60 of the electric vehicle near the road where there is the traffic jam via the network 40A, thereby controlling the vehicle lamps 60 so as to decrease the illumination.

That is, when there is the traffic jam, the speed of each vehicle on the road is slow or the vehicles are frequently stopped. Then, in the electric vehicle, if the vehicle light with normal illumination is continuously switched on during the parking, a stored amount of electricity is decreased and a risk of electricity shortage is increased. Therefore, during the traffic jam, if the illumination of the lamp 50 is increased and the illumination of the vehicle lamp 60 of the electric vehicle is decreased, it is possible to reduce a risk of the electricity shortage by suppress the storage amount of electricity of the electric vehicle from being decreased.

As illustrated in FIG. 9B, when there is no more traffic jam, the lamp control unit 12 transmits the command to decrease the illumination and recover the normal illumination to the lamps 50A and 50B via the network 40A, thereby controlling the lamps so as to decrease the illumination and recover the original illumination. In addition, when there is no more traffic jam, the vehicle lamp control unit 13 transmits the command to increase the illumination and recover the normal illumination to the vehicle lamp 60 via the network 40A, thereby controlling the vehicle lamp 60 so as to increase the illumination and recover the original illumination.

That is, when there is no more traffic jam, the electric vehicle can travel normally and thus the risk of the electricity shortage is decreased. Accordingly, the illumination of the vehicle lamp 60 of the electric vehicle is increased to recover the normal illumination. In addition, if the illumination remains increased, the power consumption of the lamps 50A and 50B is increased. Accordingly, it is possible to suppress the power from being consumed, by decreasing the illumination of the lamps 50A and 50B and recovering the normal illumination.

### [Example of Lighting Control Process Flow]

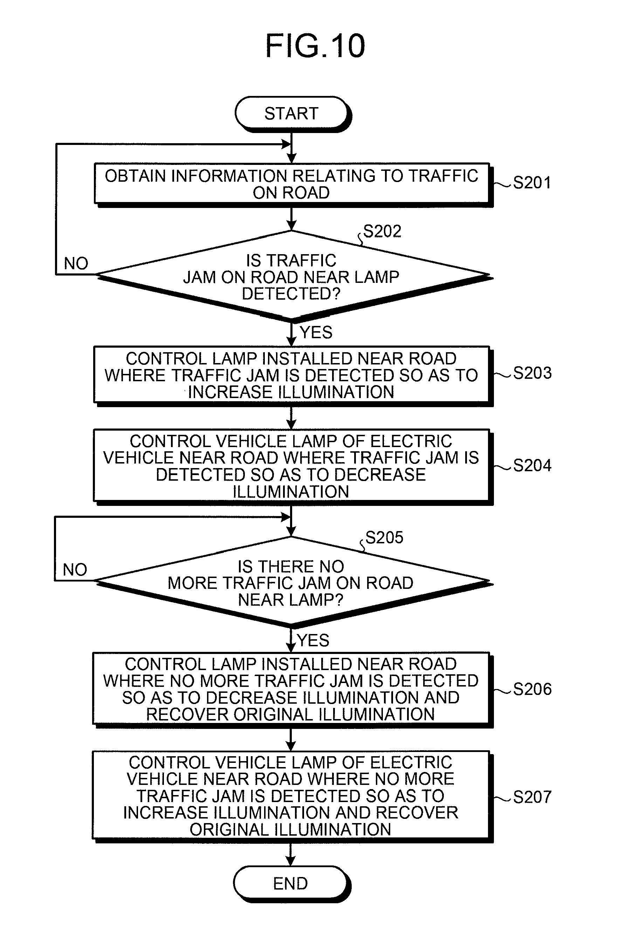

FIG. 10 is a flowchart illustrating an example of a lighting control process flow in the management apparatus 10A according to the second embodiment. Referring to FIG. 10, an example of the lighting control process flow in the management apparatus 10A in the lighting control system 2 will be described.

The traffic jam detection unit 11 of the management apparatus 10A obtains the information relating to the traffic on the road (Act 201). For example, as the information relating to the traffic on the road, the traffic jam detection unit 11 obtains any one or more information among the information relating to the route of the vehicle or location of the vehicle, which is received from the car navigation system 70, the information relating to the traffic volume on the road or the information relating to the speed of the vehicle travelling on the road, which is received from the road sensor 80, and the information relating to time for switching a signal, which is received from the traffic signal 90.

Then, the traffic jam detection unit 11 of the management apparatus 10A determines whether or not the traffic jam is detected on the road near the lamp 50, based on the information relating to the traffic on the road (Act 202). As a result, if the traffic jam detection unit 11 detects the traffic jam on the road near the lamp 50 (Act 202: Yes), the lamp control unit 12 of the management apparatus 10A controls the lamp 50 installed near the road where the traffic jam is detected so as to increase the illumination (Act 203). Then, the vehicle lamp control unit 13 of the management apparatus 10A controls the vehicle lamp 60 of the electric vehicle near the road where the traffic jam is detected so as to decrease the illumination (Act 204).

Subsequently, the traffic jam detection unit 11 determines whether or not there is no more traffic jam on the road near the lamp 50, based on the information relating to the traffic on the road (Act 205). As a result, if the traffic jam detection unit 11 determines that there is no more traffic jam on the road near the lamp 50 (Act 205: Yes), the lamp control unit 12 controls the lamp 50 installed near the road where no more traffic jam is detected so as to decrease the illumination and recover the original illumination (Act 206). Then, the vehicle lamp control unit 13 controls the vehicle lamp 60 of the electric vehicle near the road where no more traffic jam is detected so as to increase the illumination and recover the original illumination (Act 207). This allows the lighting control process to end.

### [Advantageous Effects of Second Embodiment]

As described above, in the lighting control system 2 according to the second embodiment, the management apparatus 10A obtains the information relating to the traffic on the road, and detects the traffic jam on the road near the lamp, based on the information relating to the traffic on the road. In addition, the management apparatus 10A controls the lamp 50 installed near the road where the traffic jam is detected so as to increase the illumination. In addition, the management apparatus 10A controls the vehicle lamp 60 of the electric vehicle near the road where the traffic jam is detected so as to decrease the illumination. Therefore, it is possible to reduce a risk of the electricity shortage by suppressing the storage amount of electricity of the electric vehicle from being decreased.

In addition, in the lighting control system 2 according to the second embodiment, the management apparatus 10A detects no more traffic jam on the road near the lamp 50, based on the information relating to the traffic on the road. In addition, the management apparatus 10A controls the lamp 50 installed near the road where no more traffic jam is detected so as to decrease the illumination and recover the original illumination. In addition, the management apparatus 10A controls the vehicle lamp 60 of the electric vehicle near the road where no more traffic jam is detected so as to increase the illumination and recover the original illumination. Therefore, when there is no more traffic jam, it is possible to suppress the power to be consumed, by decreasing the illumination of the lamp 50 and recovering the normal illumination.

In addition, in the lighting control system 2 according to the second embodiment, as the information relating to the traffic on the road, the management apparatus 10A obtains any one or more information among the information relating to the route of the vehicle or location of the vehicle, which is received from the car navigation system 70, the information relating to the traffic volume on the road or the information relating to the speed of the vehicle travelling on the road, which is received from the road sensor 80, and the information relating to time for switching a signal, which is received from the traffic signal 90, and detects the traffic jam or no more traffic jam on the road near the lamp 50, based on the obtained information. In this manner, the traffic jam or no more traffic jam is detected based on the various information items obtained from the car navigation system 70, the road sensor 80 and the traffic signal 90. Therefore, it is possible to properly detect the traffic jam or no more traffic jam.

### [Third Embodiment]

Next, as a third embodiment, an example will be described in which in order to specify a failed lamp, a management apparatus performs a lighting control that commands each lamp or each lamp group so as to be lit at respectively different times, monitors the power consumption at the time when each lamp receiving the command or each lamp group receiving the command is lit, and specifies the failed lamp based on the power consumption.

The lamp is lit at night and the illumination of the lamp needs to be maintained, but in some cases, the illumination is not maintained due to the failure. Accordingly, periodic maintenance and checking work have been carried out so far. However, since a failure condition cannot be recognized if the lamp is not lit, it takes time and efforts to dispatch an inspection vehicle for checking the failure condition at night.

Therefore, in order to perform maintenance work on the lamps, the management apparatus according to the third embodiment commands each lamp or each lamp group so as to be lit at respectively different times, monitors the power consumption at the time when each lamp receiving the command or each lamp group receiving the command is lit, and specifies the failed lamp based on the power consumption.

### [Example of Configuration of Lighting Control System 3]

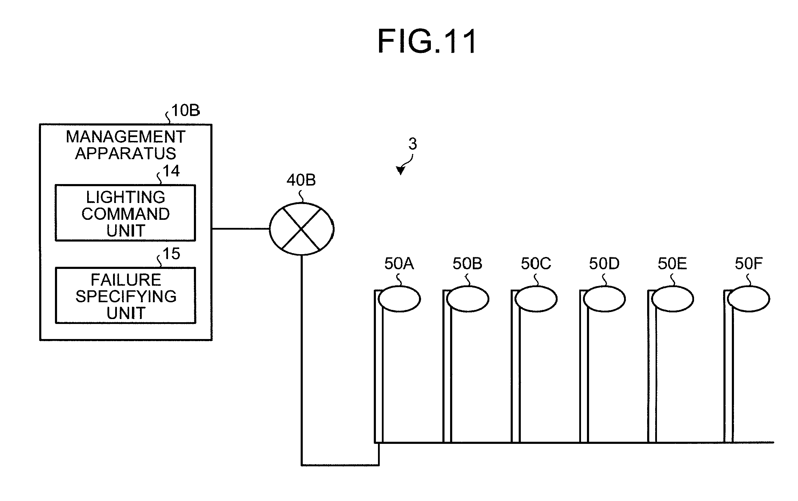

FIG. 11 illustrates an example of a configuration in a lighting control system 3 according to the third embodiment. Hereinafter, referring to FIG. 11, the configuration in the lighting control system 3 according to the third embodiment will be described. Within the configuration in the lighting control system 3 according to the third embodiment, the same configuration elements and functions as those of the first embodiment or the second embodiment will not be repeatedly described in detail and the same reference numerals are given thereto in the drawings.

As illustrated in FIG. 11, the lighting control system 3 according to the third embodiment includes a management apparatus 10B and a plurality of lamps 50A to 50F. The management apparatus 10B and the plurality of lamps 50A to 50F are communicably connected to each other via a network 40B. The number of the lamps 50A to 50F illustrated in FIG. 11 is six, but the number is merely illustrative. Accordingly any number of lamps can be adopted to be connected to the management apparatus 10B via the network 40B.

In order to perform the maintenance work on the lamps, the management apparatus 10B commands the respective lamps 50A to 50F to be lit at respectively different times. Then, the management apparatus 10B monitors the power consumption at the time when the respective lamps 50A to 50F receiving the command are lit, and specifies the failed lamp based on the power consumption. For example, the management apparatus 10B notifies the respective lamps 50A to 50F of lighting start time such that the lamp 50A, the lamp 50B, the lamp 50C, the lamp 50D, the lamp 50E, and the lamp 50F are sequentially lit in this order.

Referring to FIG. 11, a configuration of the management apparatus 10B will be described. The management apparatus 10B includes a lighting command unit 14 and a failure specifying unit 15.

The lighting command unit 14 commands each lamp or each lamp group to be lit at respectively different times. For example, the lighting command unit 14 notifies the respective lamps 50A to 50F of the lighting start time such that the lamp 50A, the lamp 50B, the lamp 50C, the lamp 50D, the lamp 50E, and the lamp 50F are sequentially lit in this order.

The failure specifying unit 15 monitors the power consumption at the time when the respective lamps receiving the command are lit, and specifies the failed lamp based on the power consumption. For example, the failure specifying unit 15, when commanding the lamp 50A, the lamp 50B, the lamp 50C, the lamp 50D, the lamp 50E, and the lamp 50F to be sequentially lit in this order, monitors whether or not the power consumption is increased to a predetermined value or more for every time when each lamp is lit, and specifies the lamp whose power consumption is not increased to the predetermined value or more, as a failed lamp.

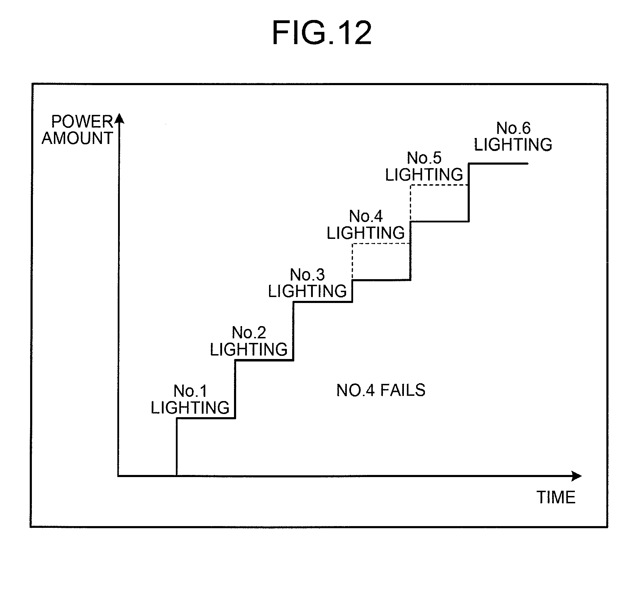

FIG. 12 illustrates a process for specifying the failed lamp by checking a power amount when lamps are sequentially lit. In the example in FIG. 12, it is assumed that the number of the lamps is six, and Nos. 1 to 6 are given to the respective lamps, as the identification number. In addition, the horizontal axis of a graph illustrated in FIG. 12 represents the elapse of "time", and the vertical axis represents a "power amount" consumed by lighting the lamp. As illustrated in FIG. 12, the lamp of No. 1 is lit, and then the lamp of No. 2 and the lamp of No. 3 are sequentially lit in this order. In any case, it is assumed that the power amount is increased to a predetermined value or more. Then, when lighting the lamp of No. 4, the power amount indicated by a dotted line is supposed to be consumed if the lamp is lit actually. However, in practice, only the power amount indicated by a solid line is consumed.

Therefore, since the power consumption is not increased to the predetermined value or more in the lamp of No. 4, the management apparatus 10B specifies the lamp of No. 4 as the failed lamp. Thereafter, the lamp of No. 5 and the lamp of No. 6 are sequentially lit in this order, but every lamp is normal since the power amount thereof is increased to the predetermined value or more when being lit.

In addition, herein, according to whether or not there is a change in the power consumption, with regard to the lamp specified as the failed lamp, it may be specified that the failure is due to a broken lamp device or a broken communication apparatus. For example, with regard to the above-described lamp of No. 4, the power consumption is a little increased as illustrated in FIG. 12. Accordingly, it may be specified that the failure is due to the broken lamp device. That is, the power consumption is increased for the lamp to be lit, but somewhere in the lamp device is broken. Thus, the original power amount cannot be consumed. In addition, if the power consumption remains unchanged, it may be specified that the failure is due to the broken communication apparatus. That is, since the communication apparatus is broken in the first place, the lamp cannot receive the lighting command from the management apparatus 10B, thereby being in a state where the power amount is not changed at all.

In addition, a case where the management apparatus 10B commands each of the lamps to have different lighting times has been described. However, without being limited to this, the management apparatus 10B may command each of the lamp groups to have the different lighting times.

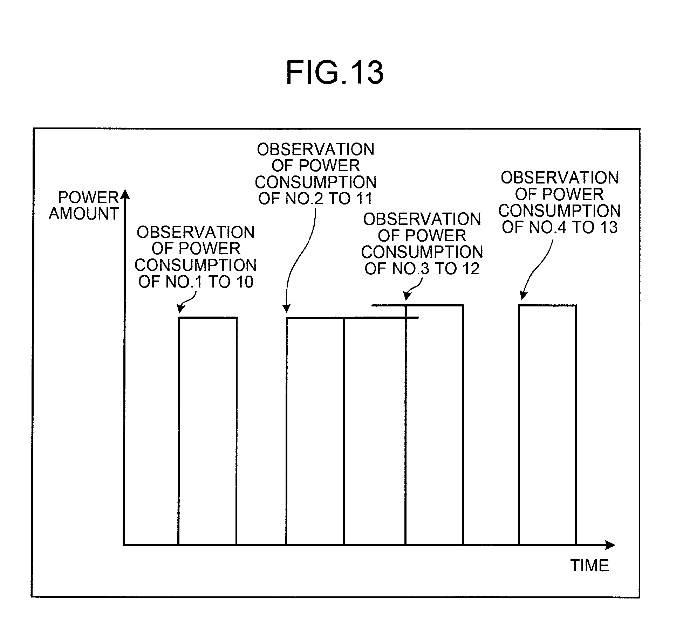

FIG. 13 illustrates a process for specifying the failed lamp by checking the power amount when the lamp groups are sequentially lit. In the example in FIG. 13, it is assumed that the number of the lamps is thirteen, and Nos. 1 to 13 are given to the respective lamps, as the identification number. In addition, in a graph illustrated in FIG. 13, similarly to FIG. 12, the horizontal axis represents the elapse of "time", and the vertical axis represents a "power amount" consumed by lighting the lamp. As illustrated in FIG. 13, the lamp group of lamps Nos. 1 to 10 is lit, then the lamp No. 1 is turned off and the lamp No. 11 is lit, and the lamp No. 2 is turned off and the lamp No. 12 is lit. In this manner, at first, the lamp group of ten lamps is collectively lit, and next time, a process is repeated where one lamp is turned off and one lamp is newly lit. The management apparatus 10B monitors the power consumption caused by the lighting of the lamp group of ten lamps.

In the example in FIG. 13, there is no change between the power consumption in a case of lighting the lamp group of the lamps Nos. 1 to 10 and the power consumption in a case of lighting the lamp group of the lamps Nos. 2 to 11. When the lamp No. 2 is turned off and the lamp No. 12 is lit, and the lamp group of the lamps Nos. 3 to 12 is lit, the power consumption is increased. Therefore, since the lamp No. 2 fails, it is assumed that the normal power is not consumed. Accordingly, the management apparatus 10B specifies the lamp No. 2 as the failed lamp.

### [Example of Lighting Control Process Flow]

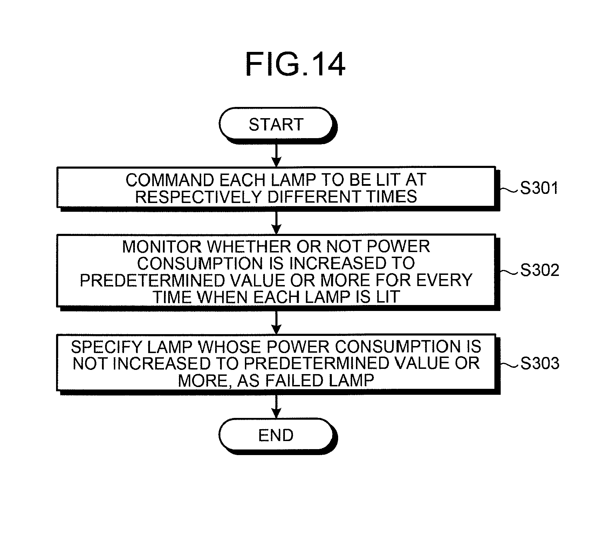

FIG. 14 is a flowchart illustrating an example of the lighting control process flow in the management apparatus 10B according to the third embodiment. Referring to FIG. 14, the example of the lighting control process flow of the management apparatus 10B in the lighting control system 3 will be described.

As illustrated in FIG. 14, the lighting command unit 14 of the management apparatus 10B commands each lamp or each lamp group to be lit at respectively different times (Act 301). For example, the lighting command unit 14 notifies the respective lamps 50A to 50F of the lighting start time such that the lamp 50A, the lamp 50B, the lamp 50C, the lamp 50D, the lamp 50E, and the lamp 50F are sequentially lit in this order.

The failure specifying unit 15 of the management apparatus 10B monitors the power consumption at the time when the respective lamps receiving the command are lit (Act 302). Then, the failure specifying unit 15 of the management apparatus 10B monitors whether or not the power consumption is increased to a predetermined value or more, and specifies the lamp whose power consumption is not increased to the predetermined value or more, as the failed lamp (Act 303). This allows the lighting control process to end.

### [Advantageous Effects of third Embodiment]

As described above, in the lighting control system 3 according to the third embodiment, the management apparatus 10B commands each lamp or each lamp group of the lamps 50A to 50F to be lit at respectively different times. In addition, the management apparatus 10B monitors the power consumption at the time when each of the lamps 50A to 50F or each lamp group receiving the command is lit, and specifies a failed lamp based on the power consumption. Therefore, the failed lamp can be easily specified in order to carry out quick maintenance work, thereby ensuring proper illumination on the road.

### [Fourth Embodiment]

Next, as a fourth embodiment, an example will be described in which a mobile communication apparatus moves at a constant speed, performs short-range communication with a lamp, obtains an ID of the lamp, performs mapping on the ID of the lamp and the installation location, and performs the mapping on the location where obtaining the ID has been missed.

As an initial setting for the lamp, a deploy map of the lamps has been automatically created in association with the ID of the lamp and the installation location of the lamp. In the related art, as a method of the mapping of the lamp, the deploy map of the lamps has been automatically created in association with GPS obtained by a mobile terminal and the ID of the lamp, which is manually registered by a registration employee who visits the installation location of each lamp. However, in some cases, the registration employee cannot identify which lamp is unchecked, since the registration employee has to individually visit the installation location of the lamp.

Therefore, the mobile communication apparatus according to the fourth embodiment moves at a constant speed, performs the short-range communication with the lamp, obtains the ID of the lamp, and stores the time and the location of obtaining the ID in association with the ID. Then, the mobile communication apparatus determines the location of the lamp where there is a time shift in obtaining the ID. Then, the mobile communication apparatus performs the mapping on the ID and the installation location of the lamp, and performs the mapping on the location where obtaining the ID has been missed. In this manner, when obtaining the ID of the lamp, the mobile communication apparatus can quickly specify the location of the lamp where obtaining the ID has been missed.

The mobile communication apparatus according to the fourth embodiment is mounted on a vehicle, and obtains the ID of the lamp by performing the short-range communication with the lamp with the aid of visible light communication. The lamps are assumed to be installed at regular intervals. The mobile communication apparatus mounted on the vehicle moves at a constant speed, performs the short-range communication with the lamp, obtains the ID of the lamp, and stores the time and the location of obtaining the ID in association with the ID. The location for obtaining the ID may be obtained by using the GPS or may be calculated by using the time of obtaining the ID and the speed of the vehicle. In addition, without obtaining the location for obtaining the ID, the location of obtaining the ID may be measured so as to be a "lamp of the n-th number" by counting the number of times of the short-range communication.

Then, the mobile communication apparatus determines whether there is a time shift in obtaining the ID, that is, whether or not a difference in the time of obtaining the ID is uniform. As a result of the determination, if there is the time shift in obtaining the ID, the mobile communication apparatus determines that obtaining the ID has been missed, and performs the mapping on the location where obtaining the ID has been missed. That is, since the lamps are installed at regular intervals, the difference in the time of obtaining the ID is supposed to be uniform, if the ID can be normally obtained. However, if there is the time shift in obtaining the ID, a possibility is increased that obtaining the ID may be missed. Accordingly, the mobile communication apparatus determines that obtaining the ID has been missed. In addition, if there is no time shift in obtaining the ID, the mobile communication apparatus performs the mapping on the ID of the lamp and the installation location of the lamp.

### [Advantageous Effects of Fourth Embodiment]

As described above, in the lighting control system according to the fourth embodiment, the mobile communication apparatus moves at a constant speed, performs the short-range communication with the lamp, obtains the ID of the lamp, and stores the time and the location of obtaining the ID in association with the ID. Then, the mobile communication apparatus determines the location of the lamp where there is a time shift in obtaining the ID. Then, the mobile communication apparatus performs the mapping on the ID and the installation location of the lamp, and performs the mapping on the location where obtaining the ID has been missed. In this manner, when obtaining the ID of the lamp, the mobile communication apparatus can quickly specify the location of the lamp where obtaining the ID has been missed.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A lighting control system (1) comprising:
a plurality of first lamps (20A and 20B) communicating with and connected to a management apparatus (10);
second lamps (30A to 30F) under the control of the first lamp (20A or 20B);
an adding unit (24a) that is disposed at the first lamp (20A or 20B) and adds the second lamps (30A to 30F) placed under the control of the other first lamp (20A or 20B) to the second lamps (30A to 30F) under its own control, when the other first lamp (20A or 20B) fails; and
a lighting control unit (24b) that performs lighting control on the second lamps (30A to 30F) under the control, based on a command relating to the lighting control, which is received from the management apparatus (10).

2. The system (1) according to claim 1,
wherein the adding unit (24a), when receiving information for identifying the other first failed lamp (20A or 20B) from the management apparatus (10), specifies the second lamps (30A to 30F) placed under the control of the other first failed lamp (20A or 20B), and adds the second lamps (30A to 30F) to the second lamps (30A to 30F) under its own control.

3. The system (1) according to claim 1,
wherein the adding unit (24a), when communication with the other first lamp (20A or 20B) is disconnected, or when receiving a notification of a failure occurrence from the other first failed lamp (20A or 20B), specifies the second lamps (30A to 30F) placed under the control of the other first failed lamp (20A or 20B), and adds the second lamps (30A to 30F) to the second lamps (30A to 30F) under its own control.

4. The system (1) according to any one of claims 1 to 3,
wherein the first lamps (20A and 20B) further include a detection unit (22) that detects a degree of brightness of the surrounding, and
wherein the lighting control unit (24b) performs the lighting control on the second lamps (30A to 30F), according to the degree of brightness of the surrounding, which is detected by the detection unit (22).

5. The system (2) according to claim 1,
wherein the management apparatus (10) includes:
a traffic jam detection unit (11) that obtains information relating to traffic on a road, and detects traffic jam on the road near a lamp, based on the information relating to the traffic on the road;
a lamp control unit (12) that controls the lamp installed near the road where the traffic jam is detected by the traffic jam detection unit (11) so as to increase illumination; and
a vehicle lamp control unit (13) that controls a vehicle lamp of an electric vehicle near the road where the traffic jam is detected by the traffic jam detection unit (11) to decrease the illumination.

6. The system (2) according to claim 5,
wherein the traffic jam detection unit (11) detects no more traffic jam on the road near the lamp, based on the information relating to the traffic on the road,
wherein the lamp control unit (12) controls the lamp installed near the road where no more traffic jam is detected by the traffic jam detection unit (11) so as to decrease the illumination and recover the original illumination, and
wherein the vehicle lamp control unit (13) controls the vehicle lamp of the electric vehicle near the road where no more traffic jam is detected by the traffic jam detection unit (11) so as to increase the illumination and recover the original illumination.

7. The system (2) according to claim 5 or 6,
wherein as the information relating to the traffic on the road, the traffic jam detection unit (11) obtains any one or more information among information relating to a route of the vehicle or a position of the vehicle, which is received from a car navigation system, information relating to a traffic volume on the road or information relating to a speed of the vehicle travelling on the road, which is received from a road sensor, and information relating to time for switching a signal, which is received from a traffic signal, and detects the traffic jam or no more traffic jam on the road near the lamp, based on the obtained information.

8. The system (3) according to claim 1,
wherein the management apparatus (10A) includes:
a lighting command unit (14) commands each lamp or each lamp group to be lit at respectively different time; and
a failure specifying unit (15) that monitors power consumption at the time for lighting each lamp or each lamp group which is commanded by the lighting command unit (14), and specifies failed lamp, based on the power consumption.

9. A lamp (20A and 20B) comprising:
an adding unit (24a) that adds lamps (30A to 30F) placed under the control of the other lamp (20A or 20B) to lamps under its own control, when the other lamp (20A or 20B) fails; and
a lighting control unit (24b) that performs lighting control on the lamps (30A to 30F) under the control, based on a command relating to the lighting control, which is received from a management apparatus (10).

10. The lamp (20A and 20B) according to claim 9,
wherein the adding unit (24a), when receiving information for identifying the other failed lamp (20A or 20B) from the management apparatus (10), specifies the lamps (30A to 30F) placed under the control of the other failed lamp (20A or 20B), and adds the lamps (30A to 30F) placed under the control to the lamps (30A to 30F) under its own control.

11. The lamp (20A and 20B) according to claim 9,
wherein the adding unit (24a), when communication with the other lamp (20A or 20B) is disconnected, or when receiving a notification of a failure occurrence from the other failed lamp (20A or 20B), specifies the lamps (30A to 30F) placed under the control of the other failed lamp (20A or 20B), and adds the lamps (30A to 30F) placed under the control to the lamps (30A to 30F) under its own control.

12. The lamp (20A and 20B) according to any one of claims 9 to 11, further comprising:
a detection unit (22) that detects a degree of brightness of the surrounding,
wherein the lighting control unit (24b) performs the lighting control on the lamps (30A to 30F), according to the degree of brightness of the surrounding, which is detected by the detection unit (22).
